Europäisches Patentamt

European Patent Office

Office européen des brevets

(19)

(11) EP 1 284 064 B1

(12) EUROPÄISCHE PATENTSCHRIFT

(45) Veröffentlichungstag und Bekanntmachung des Hinweises auf die Patenterteilung:
**22.12.2004 Patentblatt 2004/52**

(21) Anmeldenummer: 01943370.5

(22) Anmeldetag: **15.05.2001**

(51) Int Cl.⁷: **H04L 7/02**, H04L 25/03

(86) Internationale Anmeldenummer:
**PCT/EP2001/005518**

(87) Internationale Veröffentlichungsnummer:
**WO 2001/091361 (29.11.2001 Gazette 2001/48)**

(54) **VERFAHREN UND VORRICHTUNG ZUR TAKTREGELUNG EINES DIGITALEN EMPFÄNGERS**

METHOD AND DEVICE FOR CONTROLLING THE TIMING OF A DIGITAL RECEIVER

PROCEDE ET DISPOSITIF DE REGULATION DE CADENCE D'UN RECEPTEUR NUMERIQUE

(84) Benannte Vertragsstaaten:
**DE FR GB**

(30) Priorität: **24.05.2000 DE 10025566**

(43) Veröffentlichungstag der Anmeldung:
**19.02.2003 Patentblatt 2003/08**

(73) Patentinhaber: Infineon Technologies AG
81669 München (DE)

(72) Erfinder: SCHENK, Heinrich
81476 München (DE)

(74) Vertreter: **Banzer, Hans-Jörg, Dipl.-Ing.**
**Kraus & Weisert**
**Patent- und Rechtsanwälte**
**Thomas-Wimmer-Ring 15**
**80539 München (DE)**

(56) Entgegenhaltungen:
**WO-A-98/39873**

• **MUELLER K H ET AL: "TIMING RECOVERY IN DIGITAL SYNCHRONOUS DATA RECEIVERS" IEEE TRANSACTIONS ON COMMUNICATIONS, IEEE INC. NEW YORK, US, Bd. 24, Nr. 5, 1. Mai 1976 (1976-05-01), Seiten 516-531, XP000573328 ISSN: 0090-6778 in der Anmeldung erwähnt**
• **GYSEL P ET AL: "TIMING RECOVERY IN HIGH BIT-RATE TRANSMISSION SYSTEMS OVER COPPER PAIRS" IEEE TRANSACTIONS ON COMMUNICATIONS, IEEE INC. NEW YORK, US, Bd. 46, Nr. 12, 1. Dezember 1998 (1998-12-01), Seiten 1583-1586, XP000790917 ISSN: 0090-6778 in der Anmeldung erwähnt**
• **VERDIN D ET AL: "SYMBOL-TIMING RECOVERY FOR M-PSK MODULATION SCHEMES USING THE SIGNUM FUNCTION" IEE COLLOQUIUM ON NEW SYNCHRONISATION TECHNIQUES FOR RADIO SYSTEMS, IEE, LONDON, GB, 27. November 1995 (1995-11-27), Seiten 2-1-2-7, XP000603927**

## Beschreibung

Die vorliegende Erfindung betrifft ein Verfahren zur Taktregelung eines digitalen Empfängers nach dem Oberbegriff des Anspruches 1 sowie eine entsprechende Vorrichtung nach dem Oberbegriff des Anspruches 9.

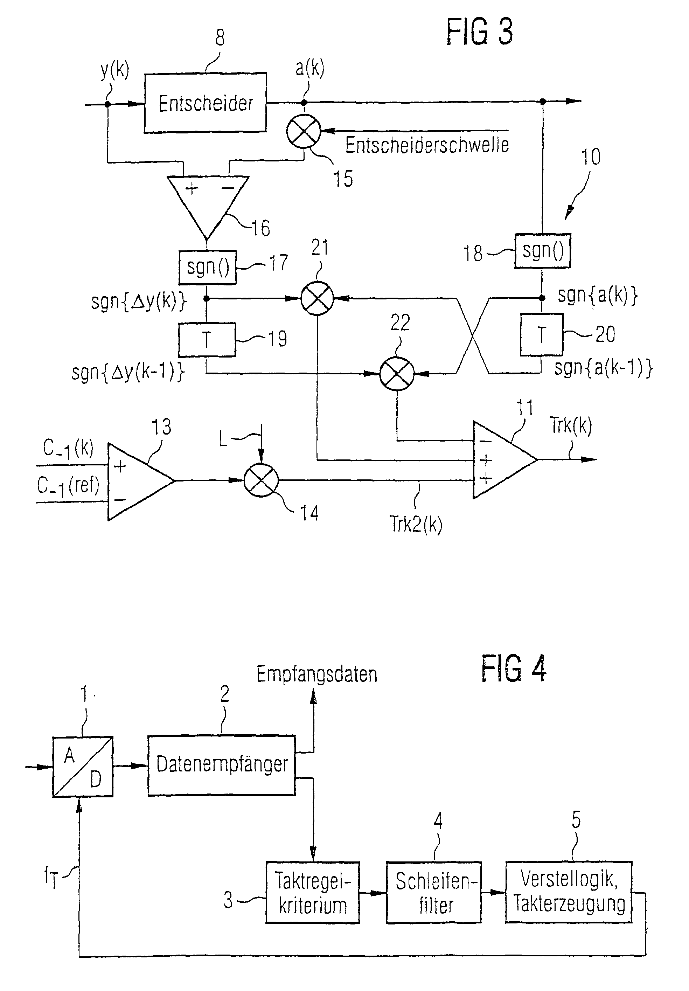

Zur Regelung des Abtasttakts eines digitalen Empfängers ist die Verwendung eines digitalen Taktregelkreises bekannt. Ein entsprechendes vereinfachtes Blockschaltbild ist in Fig. 4 dargestellt.

Wie in Fig. 4 gezeigt ist, wird einem digitalen Datenempfänger 2 ein Empfangssignal über einen Analog/ Digital-Wandler 1 (A/D-Wandler) zugeführt. Der digitale Datenempfänger 2 umfaßt ein Eingangsfilter, einen adaptiven Entzerrer sowie einen Entscheider, um die Symbolwerte des empfangenen Signals zu bestimmen bzw. zu entscheiden und als Empfangsdaten zur weiteren Verarbeitung auszugeben. Der Abtasttakt $f_T$ des A/D-Wandlers 1 wird mit Hilfe eines digitalen Taktregelkreises gewonnen, der wie ein herkömmlicher analoger Phasenregelkreis ("Phase Locked Loop", PLL) eine Einrichtung 3 zur Bestimmung des Phasenfehlers bzw. eines entsprechenden Taktregelkriteriums, einen Schleifenfilter 4 und eine Einrichtung 5 zur Erzeugung des geregelten Abtasttakts $f_T$ in Abhängigkeit von dem Ausgangssignal des Schleifenfilters 4, d.h. in Abhängigkeit von dem Taktregelkriterium, umfaßt. In einem analogen Phasenregelkreis ist die Einrichtung 3 in der Regel durch einen sogenannten Phasendiskriminator und die Einrichtung 5 durch einen spannungsgesteuerten Oszillator ("Voltage Controlled Oscillator", VCO) gebildet.

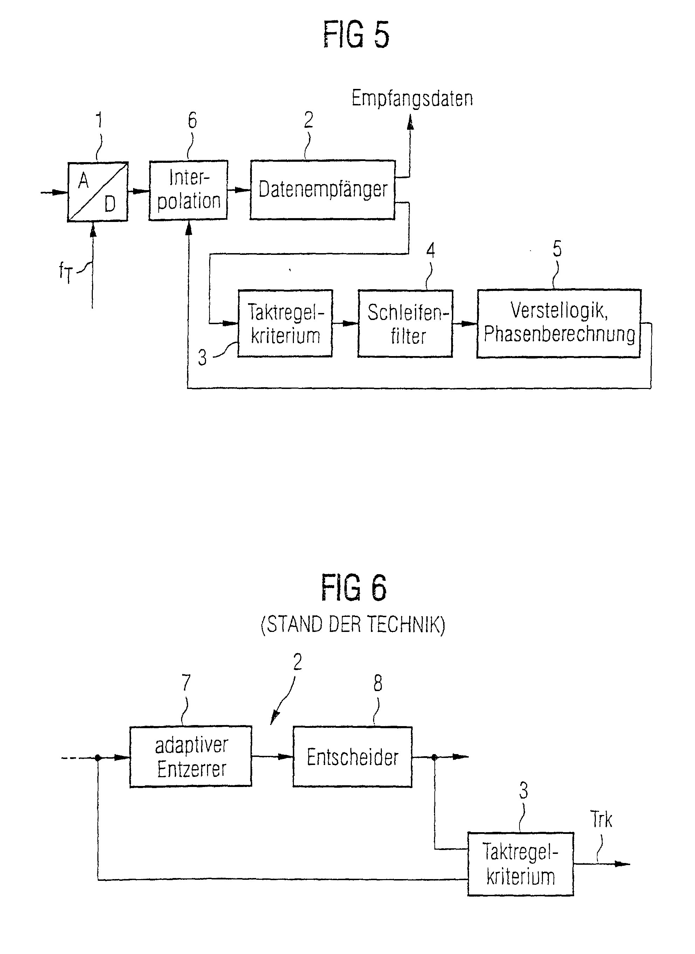

Anstelle der Erzeugung eines direkt geregelten Abtasttakts lassen sich die digitalen Abtastwerte auch mit einem mit einem freilaufenden Abtasttakt arbeitenden A/D-Wandler mit Hilfe einer Interpolationseinheit ermitteln. Ein entsprechendes Blockschaltbild ist in Fig. 5 dargestellt. Der in Fig. 5 gezeigte A/D-Wandler 1 wird mit einem freilaufenden, d.h. nichtgeregelten, Abtasttakt $f_T$ betrieben. Das digitale Ausgangssignal des A/D-Wandlers 1 wird über eine Interpolationseinheit 6 dem digitalen Datenempfänger 2 zugeführt. Die Interpolationseinheit 6 wird ihrerseits durch das Ausgangssignal der Einrichtung 5 angesteuert, die in Abhängigkeit von dem von der Einrichtung 3 ermittelten Taktregelkriterium eine ideale Abtastphase berechnet und der Interpolationseinheit 6 zuführt, so daß die Interpolationseinheit 6 die von dem A/D-Wandler 1 vorliegenden (asynchronen) digitalen Abtastwerte in entsprechende synchrone Abtastwerte interpoliert.

Sowohl für die in Fig. 4 gezeigte Taktregelungsvariante als auch für die in Fig. 5 gezeigte Taktregelungsvariante ist die Ermittlung eines geeigneten Taktregelkriteriums von zentraler Bedeutung. In beiden Fällen muß das von der Einrichtung 3 erzeugte Taktregelkriterium ein Maß für den Phasenfehler zwischen dem idealen Abtasttakt und dem tatsächlichen Abtasttakt sein, wobei das Taktregelkriterium - gegebenenfalls nach einer geeigneten Vorverarbeitung - aus dem jeweiligen Empfangssignal ermittelt wird.

Bei der Ermittlung des Taktregelkriteriums wird prinzipiell zwischen nicht-entscheidungsrückgekoppelten Taktregelkriterien und entscheidungsrückgekoppelten Taktregelkriterien unterschieden. Zur Ermittlung von nicht-entscheidungsrückgekoppelten Taktregelkriterien werden nicht die im jeweiligen digitalen Empfänger geschätzten Sendesymbolwerte (die sogenannten Entscheiderwerte) verwendet. Zur Ermittlung von entscheidungsrückgekoppelten Taktregelkriterien werden hingegen die im digitalen Empfänger geschätzten Sendesymbolwerte verwendet. Mit einem entscheidungsrückgekoppelten Regelkreis wird im allgemeinen ein besseres Verhalten hinsichtlich des jeweils auftretenden Phasenjitters erhalten.

Die vorliegende Erfindung betrifft den Fall einer entscheidungsrückgekoppelten Taktregelung.

In der Literatur wird beispielsweise in Müller, K.H.; Müller, M.: "Timing Recovering Digital Synchronous Data Receivers", IEEE Transactions on Communications, Bd. COM-24, Nr. 5, Mai 1976, S. 516-531, eine prinzipielle Möglichkeit zur Ermittlung eines geeigneten Taktregelkriteriums betrieben, wobei sich das in dieser Druckschrift beschriebene Verfahren in einer Empfängeranordnung mit einem adaptiven Entzerrer jedoch nur dann anwenden läßt, wenn für die Generierung des Taktregelkriteriums nicht die Signalwerte unmittelbar vor dem Entscheider, sondern die Signalwerte vor dem Entzerrer herangezogen werden. Eine entsprechende Anordnung ist in Fig. 6 dargestellt. In Fig. 6 ist der adaptive Entzerrer 7 und der dem adaptiven Entzerrer nachgeschaltete Entscheider 8 des digitalen Empfängers 2 dargestellt. Der adaptive Entzerrer 7 dient zur Entzerrung des Empfangssignals, wobei die Koeffizienten des adaptiven Entzerrers 7 variabel sind. Der Entscheider 8 entscheidet, d.h. bestimmt, die einzelnen Werte der empfangenen Sendesymbole. Bei der in Fig. 6 dargestellten Anordnung wird das Taktregelkriterium Trk mit Hilfe eines entscheidungsrückgekoppelten Taktregelkreises erhalten, wobei die Einrichtung 3 das Taktregelkriterium Trk insbesondere abhängig von den Eingangssignalwerten des adaptiven Entzerrers 7 bestimmt.

Das mit der in Fig. 6 gezeigten Anordnung bestimmte Taktregelkriterium Trk weist eine große Streuung auf, da für die Generierung des Taktregelkriteriums Trk das verzerrte Empfangssignal herangezogen wird. Dies führt wiederum zu einem großen Phasenjitter. Würde das Taktregelkriterium Trk aus dem Ausgangssignal des adaptiven Entzerrers 7 abgeleitet werden, würde das Taktregelkriterium Trk eine geringere Streuung aufweisen. Diese Vorgehensweise ist jedoch insofern problematisch, als daß sich dann eine Verkopplung mit dem adaptiven Entzerrer 7 und somit ein instabiles Verhalten einstellen würde.

Zur Lösung dieses Problems wird in Gysel, P.; Gilg, D.: "Timing Recovery in High Bit-Rate Transmission Systems Over Copper Pairs", IEEE Transactions on Communications, Bd. 46, Nr. 12, Dezember 1998, S. 1583-1586, vorgeschlagen, während der Einstellphase des digitalen Empfängers 2 das Eingangssignal des adaptiven Entzerrers 7 für die Generierung des Taktregelkriteriums heranzuziehen, wobei nach erfolgtem Einlauf des digitalen Empfängers für die Generierung des Taktregelkriteriums auf das Signal nach dem adaptiven Entzerrer umgeschaltet wird. Gleichzeitig wird die Einstellung des adaptiven Entzerrers eingefroren, d.h. unterbunden. Auf diese Weise wird einerseits eine geringere Streuung des Taktregelkriteriums erhalten, und andererseits entfällt die Verkopplung mit dem adaptiven Entzerrer.

Bei dem zuvor beschriebenen Verfahren ist jedoch nachteilig, daß die Einstellung des adaptiven Entzerrers nach der Einstellphase des digitalen Empfängers eingefroren wird, so daß sich der adaptive Entzerrer anschließend bei Veränderungen der Kanaleigenschaften, die beispielsweise durch Temperaturschwankungen hervorgerufen sein können, nicht nachstellen kann.

Ein Verfahren zur Taktregelung eines digitalen Empfängers mit den Merkmalen des Oberbegriffs des Anspruches 1 bzw. eine entsprechende Vorrichtung gemäß dem Oberbegriff des Anspruches 9 ist aus WO 98/39873 A bekannt.

Der vorliegenden Erfindung liegt die Aufgabe zugrunde, ein Verfahren zur Taktregelung eines digitalen Empfängers sowie eine entsprechende Vorrichtung vorzuschlagen, womit die zuvor beschriebenen Probleme gelöst werden können und insbesondere ein Taktregelkriterium mit minimaler Streuung und zusätzlich ein stabiles Regelverhalten erhalten werden kann.

Diese Aufgabe wird durch ein Verfahren mit den Merkmalen des Anspruches 1 bzw. eine Vorrichtung mit den Merkmalen des Anspruches 9 gelöst. Die Unteransprüche definieren jeweils bevorzugte und vorteilhafte Ausführungsformen der vorliegenden Erfindung.

Erfindungsgemäß wird zur Generierung des Taktregelkriteriums ein erster Anteil aus dem Eingangssignal und dem Ausgangssignal des Entscheiders gewonnen. Zur Entkopplung des adaptiven Entzerrers wird zusätzlich ein zweiter Anteil generiert, der aus einem oder mehreren Entzerrerkoeffizienten gewonnen und mit dem ersten Anteil kombiniert, insbesondere addiert wird. Dies ist möglich, da die sich einstellenden Koeffizientenwerte des Entzerrers des digitalen Empfängers von der Abtastphase abhängig sind. Auf diese Weise wird einerseits ein Taktregelkriterium mit einer minimalen Streuung gewonnen, das somit zu einem günstigen Jitterverhalten führt. Andererseits ist durch die zuvor beschriebene Entkopplung vom adaptiven Entzerrer ein stabiles Regelverhalten gewährleistet.

In den meisten Anwendungen ist es ausreichend, den zweiten Anteil des Taktregelkriteriums, d.h. die Entkopplungs- oder Korrekturgröße, aus nur einem oder höchstens zwei Koeffizienten des adaptiven Entzerrers zu ermitteln. Insbesondere der Koeffizient vor dem Hauptkoeffizienten und der Koeffizient nach dem Hauptkoeffizienten sind besonders stark von der Abtastphase abhängig, so daß es sinnvoll ist, nur diese beiden Koeffizienten oder nur einen dieser beiden Koeffizienten für die Generierung der Entkopplungsgröße herzuziehen.

Der erste Anteil des Taktregelkriteriums kann insbesondere aus dem Entscheiderfehler, d.h. aus der Differenz zwischen den Eingangs- und Ausgangswerten des Entscheiders, gewonnen werden. Insbesondere kann dieser erste Anteil Trk1(k) des Taktregelkriteriums gemäß folgender Beziehung gewonnen werden:

$$\text{Trk1}(k) = \Delta y(k) \cdot a(k-1) - \Delta y(k-1) \cdot a(k)$$

Dabei bezeichnet k den Symbol- bzw. Abtastzeitpunkt, $\Delta y$ den Entscheiderfehler, d.h. die Differenz aus dem Eingangs- und Ausgangswert des Entscheiders, und a den jeweils von dem Entscheider entschiedenen Symbolwert. Alternativ können auch lediglich die Vorzeichen von $\Delta y$ und a ausgewertet werden.

Die zuvor beschriebene Erfindung läßt sich allgemein zur Taktregelung beliebig ausgestalteter digitaler Datenempfänger einsetzen. Insbesondere ist die Erfindung sowohl für PAM (Pulsamplituden-Modulation)- als auch für CAP/QAM (Carrierless Amplitude Modulation/Quadraturamplituden-Modulation)-Übertragungssysteme anwendbar.

Die vorliegende Erfindung wird nachfolgend unter Bezugnahme auf die beigefügte Zeichnung näher anhand eines bevorzugten Ausführungsbeispiels beschrieben.

Fig. 1 zeigt den prinzipiellen Aufbau einer erfindungsgemäßen Vorrichtung zur Ermittlung eines Taktregelkriteriums gemäß einem bevorzugten Ausführungsbeispiel,

Fig. 2 zeigt eine detailliertere Darstellung der in Fig. 1 gezeigten Vorrichtung für ein PAM-Übertragungssystem,

Fig. 3 zeigt eine nochmals detailliertere Darstellung der in Fig. 1 und Fig. 2 gezeigten Vorrichtung für ein PAM-Übertragungssystem,

Fig. 4 zeigt den prinzipiellen Aufbau eines digitalen Taktregelkreises für einen digitalen Empfänger,

Fig. 5 zeigt den prinzipiellen Aufbau eines digitalen Taktregelkreises für einen digitalen Empfänger mit digitaler Interpolation und freilaufendem Abtasttakt, und

Fig. 6 zeigt eine Vorrichtung zur Gewinnung eines entscheidungsrückgekoppelten Taktregelkriteriums gemäß dem Stand der Technik.

Die vorliegende Erfindung betrifft im wesentlichen die Art und Weise, wie das zur Taktregelung erforderliche Taktregelkriterium gewonnen wird. Für die Erfindung ist jedoch unerheblich, wie tatsächlich die Taktregelung in Abhängigkeit zu diesem Taktregelkriterium durchgeführt wird. Insbesondere ist die vorliegende Erfindung sowohl auf die in Fig. 4 gezeigte Variante einer direkten Regelung des Abtasttakts $f_T$ als auch auf die in Fig. 5 gezeigte Variante, bei der mit einem freilaufenden Abtasttakt $f_T$ abgetastet und die somit gewonnenen asynchronen digitalen Abtastwerte anschließend interpoliert werden, anwendbar.

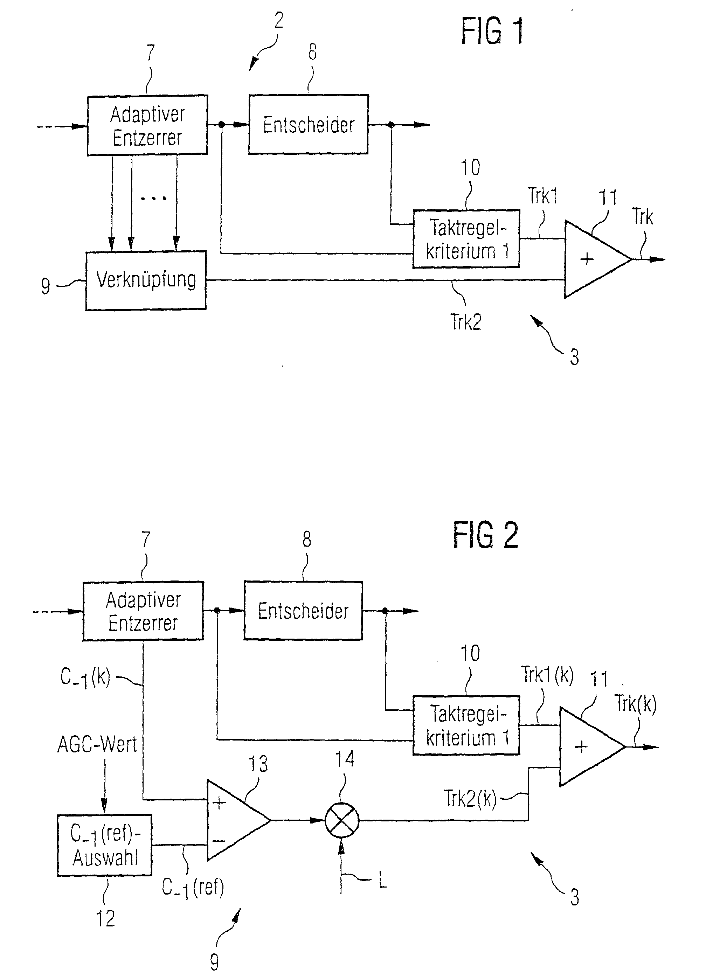

In Fig. 1 ist der prinzipielle Aufbau einer erfindungsgemäßen Vorrichtung zur Ermittlung eines Taktregelkriteriums Trk dargestellt.

Dabei wird ein erster Anteil Trk1 des Taktregelkriteriums von einer Einrichtung 10 aus dem Signal unmittelbar vor dem Entscheider 8, d.h. nach dem adaptiven Entzerrer 7, und dem Signal nach dem Entscheider 8 gewonnen. Da somit für die Ermittlung des Taktregelkriteriums das Signal nach dem adaptiven Entzerrer 7 ausgewertet wird, kann eine geringe Streuung des Taktregelkriterums erzielt werden. Da jedoch ohne zusätzliche Maßnahmen bei dieser Vorgehensweise eine Verkopplung mit dem adaptiven Entzerrer 7 und somit ein instabiles Verfahren auftreten würde, wird zur Entkopplung des adaptiven Entzerrers 7 von einer Einrichtung 9 ein zweiter Anteil Trk2 des Taktregelkriteriums generiert und von einem Addierer 11 zu dem Anteil Trk1 hinzuaddiert. Der von dem Addierer 11 somit gewonnene Summenwert Trk = Trk1 + Trk2 wird schließlich der Taktregelung zugrundegelegt und gemäß Fig. 4 bzw. Fig. 5 dem Schleifenfilter 4 zugeführt.

Der zweite Anteil Trk2 des Taktregelkriteriums kann somit als Korrektur- oder Entkopplungsgröße für den Anteil Trk1, der aus dem Eingangssignal und Ausgangssignal des Entscheiders 8 gewonnen wird, angesehen werden. Diese Entkopplungsgröße Trk2 wird von der Einrichtung 9 durch Auswertung eines Koeffizienten des adaptiven Entzerrers 7 gewonnen. Dies ist möglich, da die sich jeweils einstellenden Koeffizientenwerte des adaptiven Entzerrers 7 von der Abtastphase abhängig sind. Durch die auf diese Weise herbeigeführte Entkopplung vom adaptiven Entzerrer 7 kann ein stabiles Taktregelverhalten erzielt werden.

Für die meisten Anwendungen ist es ausreichend, wenn die Entkopplungsgröße Trk2 aus nur einem oder höchstens zwei Koeffizienten des adaptiven Entzerrers 7 gewonnen wird. Da der Koeffizient vor dem Hauptkoeffizienten und der Koeffizient nach dem Hauptkoeffizienten des adaptiven Entzerrers 7 besonders stark von der Abtastphase abhängig sind, ist es sinnvoll, nur diese beiden Koeffizienten oder nur einen dieser beiden Koeffizienten für die Generierung der Entkopplungsgröße Trk2 heranzuziehen.

Bei Übertragungssystemen mit einem adaptiven Entzerrer 7, der mit der Symbolrate arbeitet (sogenannter "T-spaced Equalizer"), hat die Lage des Abtastzeitpunktes einen großen Einfluß auf den Entzerrerfehler und somit auf das Rauschverhalten des Übertragungssystems. Die optimale Abtastphase ist hierbei vom Übertragungskanal, bei einem leitungsgebundenen Übertragungssystem beispielsweise von der Leitungslänge, abhängig. Für die optimale Abtastphase ergeben sich optimale Entzerrerkoeffizienten. Die Generierung der Entkopplungsgröße Trk2 durch die Einrichtung 9, welche zur Entwicklung der Taktregelung von dem adaptiven Entzerrer 7 dient, kann nun derart erfolgen, daß sich die optimalen Entzerrerkoeffizienten einstellen und sich somit die optimale Abtastphase ergibt. Dies soll nachfolgend näher anhand einer erfindungsgemäßen Vorrichtung für ein Übertragungssystem mit Pulsamplituden-Modulation (PAM), beispielsweise in Form eines SDSL-Übertragungssystems ("Single Pair of Symmetric Digital Substriber Line"), erläutert werden, wobei es sich hierbei um ein Basisband-Übertragungssystem handelt.

Dabei wird davon ausgegangen, daß von der in Fig. 1 gezeigten Einrichtung 9 zur Entkopplung der Taktregelung vom adaptiven Entzerrer 7 lediglich der Entzerrerkoeffizient vor dem Hauptkoeffizienten herangezogen wird. Die Einrichtung 9 ermittelt die Entkopplungsgröße Trk2 gemäß folgender Beziehung:

$$\text{Trk2}(k) = K \cdot (C_{-1}(k) - C_{-1}(\text{ref}))$$

Dabei bezeichnet der Wert k den Symbol- bzw. Abtastzeitpunkt, K bezeichnet einen reellen Skalierungsfaktor, beispielsweise $K = 2^L$ mit L ganzzahlig, mit dem das Einschwingverhalten des Taktregelkreises beeinflußt werden kann, $C_{-1}(k)$ bezeichnet den Entzerrerkoeffizienten vor dem Hauptkoeffizienten des adaptiven Entzerrers 7 und $C_{-1}$(ref) bezeichnet einen vorgebbaren Referenzwert. Im eingeschwungenen Zustand wird sich der Wert von $C_{-1}(k)$ gemäß diesem Referenzwert einstellen.

Der betrachtete Entzerrerkoeffizient $C_{-1}(k)$ liegt bei der optimalen Abtastphase je nach Leitungslänge bezogen auf den Hauptkoeffizienten etwa im Bereich von 0,05...0,3. Mit Hilfe eines sekundären Kriteriums, welches beispielsweise aus dem digitalen AGC-Wert ("Automatic Gain Control") des digitalen Empfängers, mit dem eine Information über die Leitungslänge gewonnen werden kann, abgeleitet wird, läßt sich dann für jede ausgewählte Übertragungsleitung ein geeigneter Referenzwert $C_{-1}(ref)$ generieren.

Eine entsprechende Anordnung ist in Fig. 2 dargestellt.

Wie aus Fig. 2 ersichtlich ist, wird mit Hilfe einer Einrichtung 12 abhängig von dem digitalen AGC-Wert der digitalen Empfangsanordnung ein geeigneter Referenzwert $C_{-1}(ref)$ erzeugt. Ein Subtrahierer 13 bildet die Differenz zwischen dem Entzerrerkoeffizienten $C_{-1}(k)$ und dem Referenzkoeffizienten $C_{-1}(ref)$. Das Ausgangssignal des Subtrahierers 13 wird in einem Multiplizierer 14 mit dem reellen Skalierungsfaktor $K = 2^L$ (L ganzzahlig) multipliziert, was durch eine einfache Bitverschiebeoperation des digitalen Ausgangswerts des Subtrahierers 13 um L Bitpositionen realisiert werden kann. Der Ausgangswert des Multiplizierers 14 wird schließlich als Entkopplungsgröße Trk2 dem Addierer 11 zugeführt.

Wie bereits erwähnt worden ist, wird der Anteil Trk1 des Taktregelkriteriums aus den Signalwerten vor und nach dem Entscheider 8 berechnet. Ein günstiges Jitterverhalten ergibt sich insbesondere dann, wenn der Anteil Trk1 gemäß folgender Beziehung berechnet wird:

$$Trk1(k) = \Delta y(k) \cdot a(k-1) - \Delta y(k-1) \cdot a(k)$$

Dabei bezeichnet k den Symbol- oder Abtastzeitpunkt, $\Delta y$ den Entscheiderfehler, d.h. die Differenz aus dem Eingangswert des Entscheiders 8 und dem Ausgangswert des Entscheiders 8, und a den entschiedenen Ausgangswert des Entscheiders. Anstelle der Werte für $\Delta y(k)$ und $a(k)$ kann zur Generierung des Anteils $Trk1(k)$ auch lediglich das Vorzeichen von $\Delta y(k)$ bzw. $a(k)$ herangezogen werden.

In Fig. 3 ist eine entsprechende Anordnung zur Generierung des Anteils Trk1 dargestellt.

Mit Hilfe eines Subtrahierers 16 wird die Differenz zwischen dem Eingangssymbolwert $y(k)$ und dem entschiedenen Ausgangssymbolwert $a(k)$ des Entscheiders 8 berechnet, wobei der Ausgangssymbolwert $a(k)$ zuvor mit Hilfe eines Multiplizierers 15 mit der Entscheiderschwelle des Entscheiders 8 multipliziert worden ist. Von dem Subtrahierer 16 wird somit der Wert $\Delta y(k)$ ausgegeben. Eine Einrichtung 17 ermittelt das Vorzeichen dieses Differenzwerts. Ein Verzögerungsglied 19 gibt entsprechend das Vorzeichen des unmittelbar vorhergehenden Differenzwerts $\Delta y(k-1)$ aus. Des weiteren ist eine Einrichtung 18 vorgesehen, die das Vorzeichen des von dem Entscheider 8 entschiedenen Symbolwerts $a(k)$ ermittelt. Ein weiteres Verzögerungsglied 20 gibt entsprechend das Vorzeichen des unmittelbar vorhergehenden entschiedenen Symbolwerts $a(k-1)$ aus. Mit Hilfe von Multiplizierern 21 und 22 werden die Produkte $sgn(\Delta y(k)) \cdot sgn(a(k-1))$ und $sgn(\Delta y(k-1)) \cdot sgn(a(k))$ ermittelt. In dem Addierer 11 werden die beiden Produkte subtrahiert und das daraus resultierende Ergebnis $Trk1(k)$ mit dem Ausgangswert $Trk2(k)$ des Multiplizierers 14 addiert, so daß als Ausgangssignal schließlich das gewünschte Taktregelkriterium $Trk(k)$ erhalten wird.

Das zuvor beschriebene Verfahren läßt sich auch beispielsweise bei einem QAM- oder CAP-Übertragungssystem anwenden. Hier kann das demodulierte Empfangssignal als ein komplexes Signal mit Real- und Imaginärteil interpretiert werden. Demzufolge ist ein komplexwertiger adaptiver Entzerrer 7 erforderlich. Der erste Teil Trk1 des Taktregelkriteriums kann sowohl aus dem Realteil des demodulierten Empfangssignals als auch aus dem Imaginärteil des demodulierten Empfangssignals oder aber auch aus beiden Anteilen (d.h. der Summe der aus Real- und Imaginärteil ermittelten Taktregelkriterien) generiert werden. Für die Entkopplung kann die gleiche Anordnung wie in Fig. 1 - Fig. 3 verwendet werden. Vorteilhafterweise wird hier zur Entkopplung der Koeffizient $C_{-1}(k)$ des Realteils des komplexen Entzerrers 7 verwendet.

**Patentansprüche**

1. Verfahren zur Taktregelung des digitalen Empfängers,
   wobei der digitale Empfänger (2) einen adaptiven Entzerrer (7) zum Entzerren eines Empfangssignals und einen Entscheider (8) zum Bestimmen von Symbolwerten des Empfangssignals umfaßt,
   wobei ein erster Taktregelkriterium-Anteil (Trk1) durch Auswertung des Eingangssignals und des Ausgangssignals des Entscheiders (8) gewonnen wird,
   wobei ein zweiter Taktregelkriterium-Anteil (Trk2) durch Auswertung mindestens eines Koeffizienten des adaptiven Entzerrers (7) gewonnen wird, und
   wobei das Taktregelkriterium (Trk) durch Kombination des ersten Taktregelkriterium-Anteils (Trk1) und des zweiten Taktregelkriterium-Anteils (Trk2) gewonnen und in Abhängigkeit von dem Taktregelkriterium ein Takt des digitalen Empfängers (2) geregelt wird,
   **dadurch gekennzeichnet,**
   **daß** der zweite Taktregelkriterium-Anteil (Trk2) zur Entkopplung der Taktregelung von dem adaptiven Entzerrer durch Differenzbildung zwischen dem mindestens einem ausgewerteten Koeffizienten des adaptiven Entzerrers (7) und einem vorgegebenen Referenzwert gewonnen wird.

2. Verfahren nach Anspruch 1,
   **dadurch gekennzeichnet,**
   **daß** das Taktregelkriterium (Trk) durch Addition des ersten Taktregelkriterium-Anteils (Trk1) und des zweiten Taktregelkriterium-Anteils (Trk2) gewonnen wird.

3. Verfahren nach Anspruch 1 oder 2,
   **dadurch gekennzeichnet,**
   **daß** der erste Taktregelkriterium-Anteil (Trk1) durch eine Differenzbildung zwischen dem Eingangssignal und dem Ausgangssignal des Entscheiders (8) gewonnen wird.

4. Verfahren nach einem der vorhergehenden Ansprüche,
   **dadurch gekennzeichnet,**
   **daß** die einzelnen Werte des ersten Taktregelkriterium-Anteils durch die Beziehung

$$Trk1(k) = \Delta y(k) \cdot a(k-1) - \Delta y(k-1) \cdot a(k)$$

oder

$$Trk1(k) = sgn(\Delta y(k)) \cdot sgn(a(k-1)) - sgn(\Delta y(k-1)) \cdot sgn(a(k))$$

mit $\Delta y(k) = y(k) - a(k)$
bestimmt werden, wobei k den Zeitpunkt, Trk1(k) die Werte des ersten Taktregelkriterium-Anteils, y(k) die Eingangswerte des Entscheiders (8) und a(k) die Ausgangswerte des Entscheiders (8) bezeichnen.

5. Verfahren nach einem der vorhergehenden Ansprüche,
   **dadurch gekennzeichnet,**
   **daß** der zweite Taktregelkriterium-Anteil (Trk2) durch Auswertung von höchstens zwei Koeffizienten des adaptiven Entzerrers (7) gewonnen wird.

6. Verfahren nach Anspruch 5,
   **dadurch gekennzeichnet,**
   **daß** der zweite Taktregelkriterium-Anteil (Trk2) durch Auswertung des Koeffizienten ($C_{-1}$) vor dem Hauptkoeffizienten und/oder des Koeffizienten nach dem Hauptkoeffizienten des adaptiven Entzerrers (7) gewonnen wird.

7. Verfahren nach Anspruch 6,
   **dadurch gekennzeichnet,**
   **daß** die einzelnen Werte des zweiten Taktregelkriterium-Anteils gemäß folgender Beziehung gewonnen werden:

$$Trk2(k) = K \cdot (C_{-1}(k) - C_{-1}(ref)),$$

wobei k den Zeitpunkt, Trk2(k) die Werte des zweiten Taktregelkriterium-Anteils, K einen reellen Skalierungsfaktor, $C_{-1}(k)$ den Koeffizienten vor dem Hauptkoeffizienten des adaptiven Entzerrers (7) und $C_{-1}(ref)$ den Referenzwert bezeichnet.

8. Verfahren nach Anspruch 7,
   **dadurch gekennzeichnet,**
   **daß** für den reellen Skalierungsfaktor die Beziehung $K = 2^L$ gilt, wobei L ein ganzzahliger Wert ist.

9. Vorrichtung zur Taktregelung eines digitalen Empfängers,
   wobei der digitale Empfänger (2) einen adaptiven Entzerrer (7) zum Entzerren eines Empfangssignals und einen Entscheider (8) zum Bestimmten von Symbolwerten des Empfangssignals umfaßt,
   mit einer Einrichtung (3) zur Gewinnung eines Taktregelkriteriums (Trk) aus dem Empfangssignal,

wobei die Einrichtung (3) erste Mittel (10) zur Gewinnung eines ersten Taktregelkriterium-Anteils (Trk1) durch Auswertung des Eingangssignals und des Ausgangssignals des Entscheiders (8), zweite Mittel (9) zur Gewinnung eines zweiten Taktregelkriterium-Anteils (Trk2) durch Auswertung mindestens eines Koeffizienten des adaptiven Entzerrers (7) und

Kombinationsmittel (11) zur Gewinnung des Taktregelkriteriums (Trk) durch Kombination des ersten Taktregelkriterium-Anteils (Trk1) mit dem zweiten Taktregelkriterium-Anteil (Trk2) umfaßt, und

mit einem Taktregelkreis (3-6) zum Erzeugen eines in Abhängigkeit von dem Taktregelkriterium (Tkr) geregelten Takt des digitalen Empfängers (2),

**dadurch gekennzeichnet,**

**daß** die zweiten Mittel (9) derart ausgestaltet sind, daß sie zur Entkopplung der Taktregelung von dem adaptiven Entzerrer (7) durch Differenzbildung zwischen dem mindestens einem ausgewerteten Koeffizienten ($C_{-1}$) des adaptiven Entzerrers (7) und einem vorgegebenen Referenzwert ($C_{-1}$(ref)) den zweiten Taktregelkriterium-Anteil (Trk2) bestimmen.

10. Vorrichtung nach Anspruch 9,
    **dadurch gekennzeichnet,**
    **daß** die Kombinationsmittel (11) in Form eines Addierers ausgestaltet sind.

11. Vorrichtung nach Anspruch 9 oder 10,
    **dadurch gekennzeichnet,**
    **daß** die ersten Mittel (10) zur Berechnung der einzelnen Werte des ersten Taktregelkriterium-Anteils gemäß einer der folgenden Beziehungen ausgestaltet sind:

$$Trk1(k) = \Delta y(k) \cdot a(k-1) - \Delta y(k-1) \cdot a(k)$$

oder

$$Trk1(k) = sgn(\Delta y(k)) \cdot sgn(a(k-1)) - sgn(\Delta y(k-1)) \cdot sgn(a(k)),$$

mit $\Delta y(k) = y(k) - a(k)$,
wobei k den Zeitpunkt, Trk1(k) die einzelnen Werte des ersten Taktregelkriterium-Anteils, y(k) die Eingangswerte des Entscheiders (8) und a(k) die Ausgangswerte des Entscheiders (8) bezeichnen.

12. Vorrichtung nach einem der Ansprüche 9-11,
    **dadurch gekennzeichnet,**
    **daß** die zweiten Mittel (9) zur Gewinnung des zweiten Taktregelkriterium-Anteils (Trk2) durch Auswertung von höchstens zwei Koeffizienten des adaptiven Entzerrers (8) ausgestaltet sind.

13. Vorrichtung nach Anspruch 12,
    **dadurch gekennzeichnet,**
    **daß** die zweiten Mittel (9) zur Gewinnung des zweiten Taktregelkriterium-Anteils (Trk2) durch Auswertung des Koeffizienten ($C_{-1}$) vor dem Hauptkoeffizienten des adaptiven Entzerrers (7) und/oder des Koeffizienten nach dem Hauptkoeffizienten des adaptiven Entzerrers (7) ausgestaltet sind.

14. Vorrichtung nach Anspruch 13,
    **dadurch gekennzeichnet,**
    **daß** die zweiten Mittel (9) zur Berechnung der einzelnen Werte des zweiten Taktregelkriterium-Anteils gemäß der folgenden Beziehung ausgestaltet sind:

$$Trk2(k) = K \cdot (C_{-1}(k) - C_{-1}(ref)),$$

wobei k den Zeitpunkt, Trk2(k) die einzelnen Werte des zweiten Taktregelkriterium-Anteils, K einen reellen Skalierungsfaktor, $C_{-1}(k)$ den Entzerrerkoeffizienten vor dem Hauptkoeffizienten des adaptiven Entzerrers (7) und $C_{-1}$(ref) den Referenzwert bezeichnen.

**15.** Vorrichtung nach Anspruch 14,
**dadurch gekennzeichnet,**
**daß** für den reellen Skalierungsfaktor die Beziehung K = $2^L$ gilt, wobei L eine ganze Zahl ist.

**16.** Vorrichtung nach einem der Ansprüche 9-15,
**dadurch gekennzeichnet,**
**daß** der Entscheider (8) dem adaptiven Entzerrer (7) nachgeschaltet ist.

**17.** Verwendung einer Vorrichtung nach einem der Ansprüche 9-16 zur Regelung des Abtasttakts eines digitalen Empfängers (2) in einem PAM-Übertragungssystem.

**18.** Verwendung einer Vorrichtung nach einem der Ansprüche 9-16 zur Regelung des Abtasttakts eines digitalen Empfängers (2) in einem Übertragungssystem, wobei das Empfangssignal in Form eines komplexen Signals mit einem Real- und einem Imaginärteil vorliegt,
wobei der adaptive Entzerrer (7) des digitalen Empfängers (2) komplexwertig ist.

**19.** Verwendung nach Anspruch 18,
**dadurch gekennzeichnet,**
**daß** der erste Taktregelkriterium-Anteil (Trk1) aus dem Realteil und/oder dem Imaginärteil des Empfangssignals gewonnen wird.

**20.** Verwendung nach Anspruch 18 oder 19,
**dadurch gekennzeichnet,**
**daß** der zweite Taktregelkriterium-Anteil (Trk2) durch Auswertung mindestens eines Koeffizienten des Realteils des komplexwertigen adaptiven Entzerrers (7) gewonnen wird.

**21.** Verwendung nach einem der Ansprüche 18-20,
**dadurch gekennzeichnet,**
**daß** das Übertragungssystem ein QAM- oder CAP-Übertragungssystem ist.

**Claims**

**1.** A method for controlling the sampling timing of a digital receiver,
whereby the digital receiver (2) comprises an adaptive equaliser (7) for equalizing an input signal and a decision element (8) for determining symbol values of the input signal
whereby a first timing control criterion portion (Trk1) is obtained by evaluating the input signal and the output signal of the equaliser (8),
whereby a second timing control criterion portion (Trk2) is obtained by evaluating at least one coefficient of the adaptive equaliser (7), and
whereby the timing control criterion (Trk) is obtained by combining the first timing control criterion portion (Trk1) and the second timing control criterion portion (Trk2) and in dependence on the timing control criterion timing of the digital receiver (2) is controlled,
**characterised in that**
the second timing control criterion portion (Trk2) is obtained by subtraction between the at least one evaluated coefficient of the adaptive equaliser (7) and a pre-set reference value for de-coupling the timing control from the adaptive equaliser.

**2.** A method according to claim 1, **characterised in that** the timing control criterion (Trk) is obtained by adding the first timing control criterion portion (Trk1) and the second timing control criterion portion (Trk2).

**3.** A method according to claims 1 or 2, **characterised in that** the first timing control criterion portion (Trk1) is obtained by a subtraction between the input signal and the output signal of the decision element (8).

**4.** A method according to any one of the preceding claims, **characterised in that** the individual values of the first timing control criterion portion are determined by the equation

$$\text{Trk1}(k) = \Delta y(k) \bullet a(k-1) - \Delta y(k-1) \bullet a(k)$$

or

$$\text{Trk1}(k) = \text{sgn}(\Delta y(k)) \bullet \text{sgn}(a(k-1)) - \text{sgn}(\Delta y(k-1)) \bullet \text{sgn}(a(k))$$

where $\Delta y(k) = y(k) - a(k)$

whereby k designates the time point, Trk1 (k) the values of the first timing control criterion portion, y(k) the input values of the decision element (8) and a(k) the output values of the decision element (8).

5. A method according to any one of the above claims, **characterised in that** the second timing control criterion portion (Trk2) is obtained by evaluating maximum two coefficients of the adaptive equaliser (7).

6. A method according to claim 5, **characterised in that** the second timing control criterion portion (Trk2) is obtained by evaluating the coefficients ($C_{-1}$) before the main coefficient and/or the coefficient after the main coefficient of the adaptive equaliser (7).

7. A method according to claim 6, **characterised in that** the individual values of the second timing control criterion portion are obtained according to the following equation:

$$\text{Trk2 }(k) = K \bullet (C_{-1}(k) - C_{-1}(\text{ref})),$$

whereby k designates the time point, Trk2 (k) the values of the second timing control criterion portion, K a real scaling factor, $C_{-1}(k)$ the coefficient before the main coefficient of the adaptive equaliser (7) and $C_{-1}(\text{ref})$ the reference value.

8. A method according to claim 7, **characterised in that**, for the real scaling factor, the equation $K = 2^L$ applies, where L is a whole number.

9. A device for controlling the sampling timing of a digital receiver,
   whereby the digital receiver (2) comprises an adaptive equaliser (7) for equalizing an input signal and a decision element (8) for determining symbol values of the input signal,
   having a device (3) for obtaining a timing control criterion (Trk) from the input signal, whereby the device (3) comprises first means (10) for obtaining a first timing control criterion portion (Trk1) by evaluating the input signal and the output signal of the decision element (8), second means (9) for obtaining a second timing control criterion portion (Trk2) by evaluating at least one coefficient of the adaptive equaliser (7), and
   combination means (11) for obtaining the timing control criterion (Trk) by combining the first timing control criterion portion (Trk1) with the second timing control criterion portion (Trk2), and
   having a timing control loop (3-6) for producing sampling timing of the digital receiver (2) controlled in dependence on the timing control criterion (Tkr),
   **characterised in that**
   the second means (9) are configured in such a way that, for de-coupling the timing control from the adaptive equaliser, they determine the second timing control criterion portion (Trk2) by subtraction between the at least one coefficient ($C_{-1}$) of the adaptive equaliser (7) and a pre-set reference value ($C_{-1}(\text{ref})$).

10. A device according to claim 9, **characterised in that** the combination means (11) are configured in the form of an adder.

11. A device according to claims 9 or 10, **characterised in that** the first means (10) for calculating the individual values of the first timing control criterion portion are configured according to one of the following equations:

$$\text{Trk1}(k) = \Delta y(k) \bullet a(k-1) - \Delta y(k-1) \bullet a(k)$$

or

$$Trk1(k) = sgn(\Delta y(k)) \cdot sgn(a(k-1)) - sgn(\Delta y(k-1)) \cdot sgn(a(k)),$$

where $\Delta y(k) = y(k) - a(k)$,

whereby k designates the time point, Trk1(k) the individual values of the first timing control criterion portion, y(k) the input values of the decision element (8) and a(k) the output values of the decision element (8).

**12.** A device according to any one of claims 9-11, **characterised in that** the second means (9) for obtaining the second timing control criterion portion (Trk2) are configured by evaluating maximum two coefficients of the adaptive equaliser (8).

**13.** A device according to claim 12, **characterised in that** the second means (9) for obtaining the second timing control criterion portion (Trk2) are configured by evaluating the coefficient ($C_{-1}$) before the main coefficient of the adaptive equaliser (7) and/or the coefficient after the main coefficient of the adaptive equaliser (7).

**14.** A device according to claim 13, **characterised in that** the second means (9) for calculating the individual values of the second timing control criterion portion are configured according to the following equation:

$$Trk2 (k) = K \cdot (C_{-1} (k) - C_{-1} (ref)),$$

whereby k designates the time point, Trk2(k) the individual values of the second timing control criterion portion, K a real scaling factor, $C_{-1} (k)$ the equaliser coefficient before the main coefficient of the adaptive equaliser (7) and $C_{-1} (ref)$ the reference value.

**15.** A device according to claim 14, **characterised in that** for the real scaling factor the equation $K = 2^L$ applies, where L is a whole number.

**16.** A device according to any one of claims 9-15, **characterised in that** the decision element (8) is connected after the adaptive equaliser (7).

**17.** Use of a device according to any one of claims 9-16 for controlling the sampling timing of a digital receiver (2) in a PAM transmission system.

**18.** Use of a device according to any one of claims 9-16 for controlling the sampling timing of a digital receiver (2) in a transmission system, whereby the input signal is present in the form of a complex signal with a real and an imaginary part, whereby the adaptive equaliser (7) of the digital receiver (2) is complex significant.

**19.** Use according to claim 18, **characterised in that** the first timing control criterion portion (Trk1) is obtained from the real part and/or the imaginary part of the input signal.

**20.** Use according to claims 18 or 19, **characterised in that** the second timing control criterion portion (Trk2) is obtained by evaluating at least a coefficient of the real part of the complex significant adaptive equaliser (7).

**21.** Use according to any one of claims 18-20, **characterised in that** the transmission system is a QAM or CAP transmission system.

## Revendications

**1.** Procédé pour la régulation de cadence du récepteur numérique, le récepteur (2) numérique comprenant un correcteur de distorsion (7) adaptatif pour la correction de distorsion d'un signal de réception et un dispositif de décision (8) pour la détermination de valeurs de symbole du signal de réception, une première partie du critère de régulation de cadence (Trk1) étant obtenue par l'analyse du signal d'entrée et du signal de sortie du dispositif de décision (8), une seconde partie du critère de régulation de cadence (Trk2) étant obtenue par l'analyse d'au moins un coefficient du correcteur de distorsion (7) adaptatif, et

le critère de régulation de cadence (Trk) étant obtenu par combinaison de la première partie du critère de régulation de cadence (Trk1) et de la seconde partie du critère de régulation de cadence (Trk2) et une cadence du récepteur (2) numérique étant régulée en fonction du critère de régulation de cadence,
**caractérisé en ce que**
la seconde partie du critère de régulation de cadence (Trk2) pour la dissociation de la régulation de cadence du correcteur de distorsion adaptatif est obtenue par la soustraction entre au moins un coefficient analysé du correcteur de distorsion (7) adaptatif et une valeur de référence prédéfinie.

2. Procédé selon la revendication 1,
   **caractérisé en ce que** le critère de régulation de cadence (Trk) est obtenu par l'addition de la première partie du critère de régulation de cadence (Trk1) et de la seconde partie du critère de régulation de cadence (Trk2).

3. Procédé selon la revendication 1 ou la revendication 2,
   **caractérisé en ce que**
   la première partie du critère de régulation de cadence (Trk1) est obtenue par une soustraction entre le signal d'entrée et le signal de sortie du dispositif de décision (8).

4. Procédé selon l'une quelconque des revendications précédentes,
   **caractérisé en ce que**
   les valeurs individuelles de la première partie du critère de régulation de cadence sont déterminées par la relation :

$$Trk1(k) = \Delta y(k).a(k\text{-}1) - \Delta y(k\text{-}1).a(k)$$

ou

$$Trk1(k) = sgn(\Delta y(k)).sgn(a(k\text{-}1)) - sgn(\Delta y(k\text{-}1)).sgn(a(k))$$

avec $\Delta y(k) = y(k) - a(k)$
k désignant le moment, Trk1(k) les valeurs de la première partie du critère de régulation de cadence, y(k) les valeurs d'entrée du dispositif de décision (8) et a(k) les valeurs de sortie du dispositif de décision (8).

5. Procédé selon l'une quelconque des revendications précédentes,
   **caractérisé en ce que**
   la seconde partie du critère de régulation de cadence (Trk2) est obtenue par l'analyse de au plus deux coefficients du correcteur de distorsion (7) adaptatif.

6. Procédé selon la revendication 5,
   **caractérisé en ce que**
   la seconde partie du critère de régulation de cadence (Trk2) est obtenue par l'analyse du coefficient ($C_{-1}$) avant le coefficient principal et/ou du coefficient après le coefficient principal du correcteur de distorsion (7) adaptatif.

7. Procédé selon la revendication 6,
   **caractérisé en ce que**
   les valeurs individuelles de la seconde partie du critère de régulation de cadence sont obtenues selon la relation suivante :

$$Trk2(k) = K.(C_{-3}(k) - C_{-1}(ref)),$$

k désignant le moment, Trk2(k) les valeurs de la seconde partie du critère de régulation de cadence, K un facteur du cadrage réel et $C_{-1}(k)$ le coefficient avant le coefficient principal du correcteur de distorsion (7) et $C_{-1}(ref)$ la valeur de référence.

8. Procédé selon la revendication 7,
   **caractérisé en ce que**
   on applique la relation $K = 2^L$ pour le facteur de cadrage réel, L étant un nombre entier.

9. Dispositif pour la régulation de cadence d'un récepteur numérique, le récepteur (2) numérique comprenant un correcteur de distorsion (7) adaptatif pour la correction de distorsion d'un signal de réception et un dispositif de décision (8) pour la détermination de valeurs de symbole du signal de réception, avec un appareil (3) pour l'obtention d'un critère de régulation de cadence (Trk) à partir du signal de réception,

l'appareil (3) comprenant des premiers moyens (10) pour l'obtention d'une première partie du critère de régulation de cadence (Trk1) par l'analyse du signal d'entrée et du signal de sortie du dispositif de décision (8), des seconds moyens (9) pour l'obtention d'une seconde partie du critère de régulation de cadence (Trk2) par l'analyse au moins d'un coefficient du correcteur de distorsion (7) adaptatif et

des moyens de combinaison (11) pour l'obtention du critère de régulation de cadence (Trk) par la combinaison de la première partie du critère de régulation de cadence (Trk1) avec la seconde partie du critère de régulation de cadence (Trk2) et

avec un circuit régulateur de cadence (3-6) pour la génération d'une cadence, régulée en fonction du critère de régulation de cadence (Tkr), du récepteur (2) numérique,

**caractérisé en ce que**

les seconds moyens (9) sont conçus de telle sorte que, pour la dissociation de la régulation de cadence du correcteur de distorsion (7) adaptatif, ils déterminent la seconde partie de la régulation de cadence (Trk2) par la soustraction entre le moins un coefficient ($C_{-1}$) analysé du correcteur de distorsion (7) adaptatif et une valeur de référence ($C_{-1}$(ref)) prédéfinie.

**10.** Dispositif selon la revendication 9,
**caractérisé en ce que**
les moyens de combinaison (11) sont conçus sous la forme d'un additionneur.

**11.** Dispositif selon la revendication 9 ou la revendication 10,
**caractérisé en ce que**
les premiers moyens (10) pour le calcul des valeurs individuelles de la première partie du critère de régulation de cadence sont conçus selon l'une des relations suivantes :

$$Trk1(k) = \Delta y(k).a(k\text{-}1) - \Delta y(k\text{-}1).a(k)$$

ou

$$Trk1(k) = sgn(\Delta y(k)).sgn(a(k\text{-}1)) - sgn(\Delta y(k\text{-}1)).sgn(a(k)),$$

avec $\Delta y(k) = y(k) - a(k)$,
k désigne le moment, Trk1(k) les valeurs individuelles de la première partie du critère de régulation de cadence, y(k) les valeurs d'entrée du dispositif de décision (8) et a(k) les valeurs de sortie du dispositif de décision (8).

**12.** Dispositif selon l'une quelconque des revendications 9 à 11,
**caractérisé en ce que**
les seconds moyens (9) pour l'obtention de la seconde partie du critère de régulation de cadence (Trk2) sont conçus par l'analyse d'au maximum deux coefficients du correcteur de distorsion (8) adaptatif.

**13.** Dispositif selon la revendication 12,
**caractérisé en ce que**
les seconds moyens (9) pour l'obtention de la seconde partie du critère de régulation de cadence (Trk2) sont conçus par l'analyse du coefficient ($C_{-1}$) avant le coefficient principal du correcteur de distorsion (7) adaptatif et/ou du coefficient après le coefficient principal du correcteur de distorsion (7) adaptatif.

**14.** Dispositif selon la revendication 13,
**caractérisé en ce que**
les seconds moyens (9) sont conçus pour le calcul des valeurs individuelles de la seconde partie du critère de régulation de cadence selon la relation suivante :

$$Trk2(k) = K.(C_{-1}(k) - C_{-1}(ref)),$$

k désigne le moment, Trk2 (k) les valeurs individuelles de la seconde partie du critère de régulation de cadence, K un facteur de cadrage réel, $C_{-1}(k)$ le coefficient du correcteur de distorsion (7) avant le coefficient principal du correcteur de distorsion (7) adaptatif et ($C_{-1}(ref)$) la valeur de référence.

**15.** Dispositif selon la revendication 14,
**caractérisé en ce que**
on a la relation $K = 2^L$ pour le facteur de cadrage réel, L étant un nombre entier.

**16.** Dispositif selon l'une quelconque des revendications 9 à 15,
**caractérisé en ce que**
le dispositif de décision (8) est monté en aval du correcteur de distorsion (7) adaptatif.

**17.** Utilisation d'un dispositif selon l'une quelconque des revendications 9 à 16 pour la régulation de la cadence de balayage d'un récepteur (2) numérique dans un système de transmission PAM.

**18.** Utilisation d'un dispositif selon l'une quelconque des revendications 9 à 16 pour la régulation de la cadence de balayage d'un récepteur (2) numérique dans un système de transmission, le signal de réception étant présent sous la forme d'un signal complexe avec une partie réelle et une partie imaginaire,
le correcteur de distorsion (7) adaptatif du récepteur (2) numérique étant une valeur complexe.

**19.** Utilisation selon la revendication 18,
**caractérisée en ce que**
la première partie du critère de régulation de cadence (Trk1) est obtenue à partir de la partie réelle et/ou de la partie imaginaire du signal de réception.

**20.** Utilisation selon la revendication 18 ou la revendication 19,
**caractérisée en ce que**
la seconde partie du critère de régulation de cadence (Trk2) est obtenue par l'analyse d'au moins un coefficient de la partie réelle du correcteur de distorsion (7) adaptatif à valeur complexe.

**21.** Utilisation selon l'une quelconque des revendications 18 à 20,
**caractérisée en ce que**
le système de transmission est un système de transmission QAM ou CAP.

## FIG 1

## FIG 2

## FIG 3

## FIG 4

# FIG 5

Empfangsdaten

# FIG 6

(STAND DER TECHNIK)